# EUROPÄISCHE PATENTSCHRIFT

(11) **EP 3 412 804 B1**
(45) Veröffentlichungstag und Bekanntmachung des Hinweises auf die Patenterteilung: **29.01.2020**
(21) Anmeldenummer: 18174564.7
(22) Anmeldetag: 28.05.2018
(51) Int. Cl.: D01G 21/00, D01G 23/06, D01G 23/08

(54) **VERFAHREN UND VORRICHTUNG ZUR PRODUKTIONSSTEUERUNG IN EINER PUTZEREI**
METHOD AND DEVICE FOR PRODUCTION CONTROL IN A BLOWING ROOM
PROCEDE ET DISPOSITIF DE COMMANDE DE PRODUCTION DANS UN BATTAGE

(30) Priorität: 08.06.2017 CH 7412017
(43) Veröffentlichungstag der Anmeldung: 12.12.2018
(73) Patentinhaber: Maschinenfabrik Rieter AG, 8406 Winterthur (CH)
(72) Erfinder: LÜTHARD, Reto, 8406 Winterthur (CH); GSCHLIESSER, Gerhard, 8400 Winterthur (CH)

(56) Entgegenhaltungen:
- EP-A1- 0 434 639
- EP-A1- 0 548 023
- CH-A- 515 351

## Beschreibung

Die Erfindung betrifft ein Verfahren und eine Vorrichtung zur Steuerung der Produktion in einer Putzerei.

Faserverarbeitende Maschinen wie beispielsweise Reiniger, Zwischenspeicher, Mischer oder Karden finden Anwendung in der Putzerei und dienen der Reinigung, Mischung und der Auflösung des Fasergutes in Einzelfasern sowie deren Parallelisierung.

In einer Putzerei durchlaufen die für die Spinnerei vorzubereitenden Fasern mehrere Verarbeitungsstufen. In einer ersten Stufe werden die Fasern in Form von Faserflocken aus Faserballen herausgelöst. Hierfür finden meist sogenannte Ballenöffner Verwendung. Über eine pneumatische Fördereinrichtung werden diese Faserflocken aus dem Ballenöffner herausgebracht und an eine nachfolgende Reinigungsmaschine verbracht. Die pneumatische Fördereinrichtung besteht dabei im Wesentlichen aus einer Rohrleitung und einem Ventilator zur Erzeugung des notwendigen Förderluftstromes. Von der Reinigungsmaschine werden die gereinigten Faserflocken beispielsweise wiederum pneumatisch einem Mischer zugeführt. Über einen weiteren Transportabschnitt werden die Faserflocken vom Mischer an eine Karde gefördert, welche die Faserflocken in Einzelfasern auflöst und zu einem Faserband ausbildet.

Die Anordnung der einzelnen Maschinen in einer Putzerei kann verschieden ausgeführt sein, dies ist unter anderem abhängig vom zu verarbeitenden Rohstoff und dem zu erzielenden Produkt. Beispielsweise können Grobreiniger und Feinreiniger eingesetzt werden, oder auch Zwischenspeicher Anwendung finden. Im Sinne dieser Anmeldung ist eine speisende Maschine eine Maschine welche Fasergut in ein Transportsystem abgibt. Für die Übergabe des Fasergutes umfasst die speisende Maschine einen speisenden Teil. Eine zu speisenden Maschine dient als Empfänger des Fasergutes. Die zu speisende Maschine verarbeite das empfangene Fasergut und kann dies unter Umständen über einen speisenden Teil wiederum an ein weiteres Transportsystem übergeben. Der Transport zwischen den Maschinen erfolgt meist pneumatisch in einem Förderluftstrom welcher durch einen Ventilator erzeugt wird. Einfache Maschinen wie beispielsweise Metallausscheider, Fremdteil- und Fremdfaser-Erkennungssysteme oder einfache Reiniger, welche zwar die Transportleitung in ihrer Form unterbrechen, jedoch nicht den eigentlichen Förderstrom unterbinden, sind in das Transportsystem integriert und weisen daher auch keinen speisenden Teil auf. Der Förderluftstrom verläuft kontinuierlich durch diese Vorrichtungen. Dabei müssen durch den Förderluftstrom respektive eine bestimmte Förderleistung oder Produktion die Bedürfnisse der einzelnen Maschinen am Anfang, am Ende sowie im Transportsystem für eine reibungslose Funktion wie auch der Bedarf an einer bestimmten Transportleistung befriedigt werden.

Die DE 31 51 697 A1 befasst sich mit der Steuerung der Beschickung von zu speisenden Maschinen zur Verarbeitung von Fasergut. Dabei erfolgt eine Regelung der speisenden Teils einer Maschine aufgrund der Anforderung der zu speisenden Maschine. Die Anforderung und damit die Produktion der speisenden Maschine wird dabei aufgrund eines Füllstandes der zu speisenden Maschine errechnet. Die zwischen der speisenden und der zu speisenden Maschine angeordneten Maschinen werden mit einer unveränderten Geschwindigkeit betrieben. Durch diese Regelung werden Stillstandszeiten von Putzereimaschinen vermieden. Nachteilig jedoch ist, dass auch sehr geringe Mengen an Fasergut von der speisenden über dazwischen liegende Maschinen an die zu speisenden Maschinen gefördert werden. Dabei wird ein Produktionsminimum, welches durch die eingestellte Geschwindigkeit an der dazwischen liegenden Maschine für eine gleichbleibende Qualität der Verarbeitung notwendig ist, nicht berücksichtigt. Auch die CH 670 2578 A5 lehrt, dass die Produktionshöhe eines zu speisenden Teils einer speisenden Maschine durch eine Anforderung einer zu speisenden Maschine geregelt werden soll. Hierbei wird ein optimaler Betrieb der dazwischen angeordneten Maschinen nicht berücksichtigt. Weiterhin offenbart die CH 515 351 ein Verfahren und eine Vorrichtung gemäß den Oberbegriffen der unabhängigen Ansprüche.

Ebenfalls aus dem Stand der Technik bekannt ist ein Stop-and-Go-Betrieb. Dabei werden die speisenden Teile der speisenden Maschinen aufgrund des bedarf der zu speisenden Maschinen ein- und ausgeschaltet. Dies ermöglicht einen Betrieb der zwischen der speisenden und der zu speisenden Maschine angeordneten Maschine mit einer jeweils gleichen Produktion. Nachteilig sind jedoch die häufigen Anfahr- und Stoppvorgänge, welche zur Störungen aufgrund von instabilen Betriebszuständen oder Verstopfungen innerhalb der einzelnen Maschine führen können.

Die Aufgabe der Erfindung ist es demnach ein Verfahren und eine Vorrichtung zur Steuerung der Produktion in einer Putzerei zu schaffen, welches einen Betrieb der einzelnen Maschinen in einem jeweiligen Produktionsbereich ermöglicht, welcher eine hohe Qualität und Betriebssicherheit gewährleistet.

Die Aufgabe wird gelöst durch die Merkmale im kennzeichnenden Teil der unabhängigen Ansprüche.

Zur Lösung der Aufgabe werden ein neuartiges Verfahren und die zugehörige Vorrichtung zur Steuerung der Produktion in einer Putzerei mit einer Steuerung und mit zumindest einer speisenden Maschine und zumindest einer zu speisenden Maschine mit einem speisenden Teil vorgeschlagen. Die zu speisende Maschine weist eine Füllstandsmessung auf. Die Maschinen sind mit der Steuerung verbunden. Für jede speisende Maschine wird ein Produktionsbereich mit einem Produktionsminimum und einem Produktionsmaximum festgelegt. Die zu speisende Maschine bestimmt aufgrund des Füllstandes eine Produktion des speisenden Teils der speisenden Maschine. Bei einer Unterschreitung des Produktionsminimums wird der speisende Teil der speisenden Maschine abgeschaltet, wobei die Abschaltung unabhängig von einem Füllzustand der zu speisenden Maschine erfolgt.

Die zu speisenden Maschinen wie beispielsweise ein Mischer oder Karden werden mit einer bestimmten Produktionsmenge betrieben und verfügen in der Regel über Füllschächte. Die Füllschächte sind mit Füllstandsmessungen versehen. Aufgrund des Füllstandes und dessen Verlaufs werden von der speisenden Maschine Faserflocken angefordert. Die speisende Maschine verfügt über einen speisenden Teil, welcher auf diese Anforderung reagiert und die gewünschte Menge an Faserflocken entsprechend der Anforderung zur Verfügung stellt. Die Produktion innerhalb des Produktionsbereichs wird durch die zu speisende Maschine bestimmt und damit die Produktion innerhalb des Produktionsbereiches geregelt. Unterschreitet die angeforderte Menge an Faserflocken ein für den kontinuierlichen Betrieb vorgesehenes Produktionsminimum wird die Speisung unterbrochen und der Betrieb des speisenden Teils der speisenden Maschine abgeschaltet. Dadurch wird vermieden, dass die speisende Maschine in einem Bereich betrieben wird, welcher für die Speisung nicht optimal ist.

Der Produktionsbereich wird durch zwischen der speisenden Maschine und der zu speisenden Maschine angeordnete weitere faserverarbeitende Maschinen bestimmt. Das Produktionsminimum sowie das Produktionsmaximum, und dadurch der dazwischen liegende Produktionsbereich, werden beispielsweise bestimmt durch die Einstellung eines zwischen der speisenden und der zu speisenden Maschine angeordneten Reinigers. Der Reiniger ist mit seiner Einstellung für einen bestimmten Produktionsbereich geeignet. Wird ein Produktionsminimum unterschritten oder ein Produktionsmaximum überschritten aufgrund der durch die zu speisende Maschine angeforderten Menge, hat dies Auswirkungen auf die Qualität und die Betriebssicherheit des Reinigers. Durch eine Veränderung der Einstellung kann der Produktionsbereich und damit das Produktionsminimum und Produktionsmaximum verschoben werden. Dies gilt auch für andere zwischen der speisenden und der zu speisenden Maschine eingebaute Maschinen, wie beispielsweise Schwerteil- oder Metallausscheider.

Wird durch die Anforderung das Produktionsmaximum erreicht, sodass ein notwendiger Füllstand in einer zu speisenden Maschine, beispielsweise in einer Karde nicht gehalten werden kann, besteht vorteilhafterweise die Möglichkeit durch die Steuerung auf die Produktion der zu speisenden Maschine, respektive der Karde einzuwirken oder einzelne zu speisende Maschinen respektive Karden abzuschalten. Dies führt zu einer Erholung der Füllzustände. Eine derartige Verknüpfung hat den Vorteil, dass ein Leerlaufen von zu speisenden Maschinen und damit einhergehend ein Produktionsverlust durch einen notwendigen Wiederanlauf aus dem Leerzustand vermieden wird. Auch ergibt sich eine erhöhte Betriebssicherheit für die zu speisende Maschine.

Das Produktionsmaximum kann auch durch die zu speisende Maschine selbst vorgegeben werden. In diesem Falle ist eine Anforderung der zu speisenden Maschine welche grösser ist als das Produktionsmaximum nicht erfüllbar und auch ein Wechsel des Produktionsbereichs nicht möglich.

Durch eine entsprechende Ausrüstung und Automatisierung der zwischen der speisenden Maschine der zu speisenden Maschine angeordnete weitere faserverarbeitende Maschine ist es möglich, bei einem Wechsel des Produktionsbereichs die zwischen der speisenden Maschine der zu speisenden Maschine angeordnete weitere faserverarbeitende Maschine automatisch neu einzustellen. Ein Wechsel des Produktionsbereichs bedeutet eine Verschiebung des Produktionsminimums und / oder des Produktionsmaximums.

Wird nach einer Zeit nach einer vorhergehenden Abschaltung der Speisung durch die Steuerung eine Anforderung von Faserflocken der zu speisenden Maschine aufgrund eines niedrigen Füllzustandes mit einer Produktionsmenge über dem Produktionsminimum festgestellt, vermag die zu speisende Maschine den speisenden Teil der speisenden Maschine über die Steuerung wieder einzuschalten.

Durch diese Verfahrensweise wird ein Betrieb der gesamten Putzerei in einem für alle beteiligten Maschinen optimalen Bereich sichergestellt und eine grösstmögliche Qualität und Betriebssicherheit der Produktion erreicht.

Die Steuerung speichert und wertet die Produktionswerte der speisenden und zu speisenden Maschine sowie eine Dauer zwischen den Abschaltungen der speisenden Maschine und einer verminderten Produktion oder Abschaltung der zu speisenden Maschine aus. Aufgrund dessen nimmt die Steuerung eine Anpassung der Produktion und/oder einen Wechsel des Produktionsbereichs vor um notwendige Abschaltungen zu minimieren. Abhängig von der Automatisierung der Maschinen werden durch die Steuerung mögliche Verbesserungen oder aufgrund eines Wechsels des Produktionsbereiches notwendige Änderungen in der Einstellung der verschiedenen Maschinen vorgeschlagen, welche anschliessend vom Betriebspersonal umgesetzt werden können. Bei einer hohen Automatisierung werden die Änderungen durch die Steuerung veranlasst und durch die Maschine selbsttätig ausgeführt.

Ebenfalls vorgeschlagen wird eine Vorrichtung zur Durchführung des oben beschriebenen Verfahrens. Die Vorrichtung umfasst eine Steuerung und zumindest eine speisende und zumindest eine zu speisende Maschine. Die zu speisende Maschine weist eine Füllstandsmessung auf und die Maschinen sind mit der Steuerung verbunden. Für jede speisende Maschine ist in der Steuerung ein Produktionsbereich mit einem Produktionsminimum und einem Produktionsmaximum festlegbar, wobei eine Produktion des speisenden Teils der speisenden Maschine durch die zu speisende Maschine aufgrund des Füllstandes bestimmt ist. Bei einer Unterschreitung des Produktionsminimums ist unabhängig von einem Füllzustand der zu speisenden Maschine eine Abschaltung eines speisenden Teils der speisenden Maschine vorgesehen. Die Steuerung kann als eine zentrale Steuerung ausgeführt sein, wobei auch eine bestimmte Steuerung einer Maschine die Funktionen einer zentralen Steuerung übernehmen kann. Entsprechend sind die Maschinen miteinander elektronisch verknüpft.

Der Produktionsbereich ist bestimmt durch zwischen der speisenden Maschine und der zu speisenden Maschine angeordnete weitere faserverarbeitende Maschinen. Diese Maschinen, welche keinen direkten Einfluss auf die Höhe der Produktion haben, sondern passiv in den Fasertransportweg von der speisenden zur zu speisenden Maschine eingebunden sind, arbeiten nur in einem bestimmten Produktionsbereich zuverlässig. Eine Erweiterung oder Veränderung des Produktionsbereichs verlangt meist eine Änderung der Einstellung dieser Maschinen um ein qualitativ hochwertiges Produkt herstellen zu können. Um einen Verlust von Qualität und Betriebssicherheit zu vermeiden, ist bei Unterschreitung eines Produktionsminimums die Abschaltung der Speisung vorgesehen.

Ein Wechsel des Produktionsbereichs kann durch eine Veränderung der Einstellungen vorgenommen werden. Ein derartiger Wechsel kann beispielsweise durch eine Veränderung der zu verarbeitenden Fasern oder eine Anpassung der Qualität der verarbeiteten Fasern notwendig oder erwünscht sein. Ebenfalls kann aber auch die Steuerung einen Wechsel des Produktionsbereichs aufgrund der Häufung der Abschaltvorgänge vorschlagen. Bevorzugterweise sind Mittel vorgesehen, durch welche bei einem Wechsel des Produktionsbereichs eine Neueinstellung der zwischen der speisenden Maschine und der zu speisenden Maschine angeordneten weiteren faserverarbeitenden Maschine durch die Steuerung ausführbar ist. Dadurch kann die Steuerung selbst eine Optimierung des Verfahrens vornehmen. Voraussetzung dafür ist eine genügend hohe Automation der einzelnen Maschinen, welche die notwendigen Mittel, wie beispielsweise Servomotoren, Linearantriebe oder andere Mess- und Verstelleinrichtungen beinhaltet.

Vorteilhafterweise sind für verschiedene Einstellungen der zwischen der speisenden Maschine und der zu speisenden Maschine angeordneten weiteren faserverarbeitenden Maschine in der Steuerung verschiedene Produktionsbereiche hinterlegt. Dadurch ist es möglich, dass durch Weitergabe der vorgenommenen Einstellung an die Steuerung die Speisung in einem entsprechenden Produktionsbereich betrieben wird. Die Weitergabe der Einstellung kann dabei durch das Personal oder bei einer entsprechend hohen Automatisierung durch die Maschine selbst erfolgen.

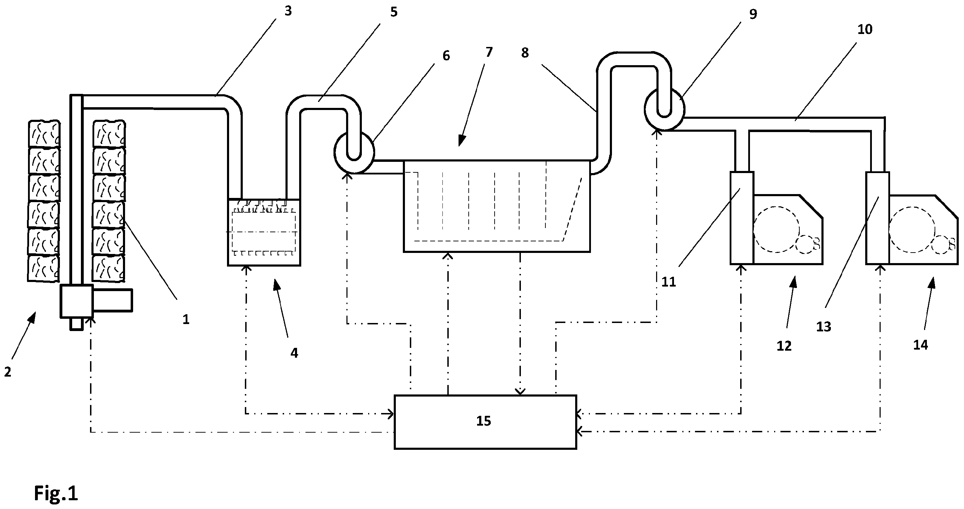

Im Folgenden wird die Erfindung anhand einer beispielhaften Ausführungsform erklärt und durch Figur 1 näher erläutert.

Figur 1 zeigt eine schematische Darstellung einer beispielhaften Anordnung von Maschinen in einer Putzerei. Die Darstellung zeigt eine vereinfachte Ausrüstung einer Putzerei, welche in vielen Fällen aus weiteren Maschinen in verschiedenster Anordnung besteht.

Am Beginn steht ein Ballenöffner 2 welcher aus bereit gestellten Faserballen 1 Faserflocken entnimmt und diese einer Transportleitung 3 zuführt. Durch die Transportleitung 3 werden die Faserflocken einem Reiniger 4 zugeführt. Nach Durchlaufen des Reinigers 4 werden die Faserflocken über eine weitere Transportleitung 5 und einen Ventilator 6 an einen Mischer 7 übergeben. Der Ventilator 6 sorgt für den notwendigen Förderluftstrom um die Faserflocken vom Ballenöffner 2 über den Reiniger 4 zum Mischer 7 zu transportieren. Der Ballenöffner 2, der Reiniger 4, der Ventilator 6 und der Mischer 7 sind mit einer Steuerung 15 verbunden. Der Ballenöffner 2 ist eine speisende Maschine und der Mischer 7 eine zu speisende Maschine. Der Reiniger 4 ist eine zwischen der speisenden und der zu speisenden Maschine angeordnete Maschine. Der Reiniger 4 weist eine bestimmte Einstellung seiner Organe auf, welche eine qualitativ hochwertige Reinigung der Faserflocken und eine hohe Betriebssicherheit in einem bestimmten Produktionsbereich gewährleisten. Dieser Produktionsbereich, mit einem Produktionsminimum und einem Produktionsmaximum, ist der Steuerung 15 bekannt, respektive kann die Steuerung 15 aus den vom Reiniger 4 übermittelten Daten errechnen. Abhängig vom Füllzustand des Mischers 7 regelt die Steuerung 15 die Produktion des speisenden Teils des Ballenöffners 2. Unterschreitet diese Produktion das vorgegebene Produktionsminimum wird durch die Steuerung 15 der Ballenöffner abgeschaltet. Überschreitet die Produktion respektive die Anforderung das Produktionsmaximum wird der Mischer 7 entsprechend in seiner Produktion gedrosselt oder abgeschaltet um ein Leerlaufen zu verhindern. Eine gleichzeitige Abschaltung des Ventilators 6 ist nicht zwingend notwendig. Durch eine ständige Entnahme von Faserflocken aus dem Mischer 7 steigt die Anforderung wieder an und fällt erneut in den Produktionsbereich, worauf die Steuerung 15 den Ballenöffner 2 wieder einschaltet.

Der Mischer 7 umfasst auch einen speisenden Teil um die gemischten Faserflocken beispielsweise an Karden 12 und 14 weiterzugeben. Die Weitergabe erfolgt über die Transportleitungen 8 und 10 sowie den Ventilator 9. Die Karden 12 und 14 sind jeweils mit Füllschächten 11 und 13 versehen. Aufgrund der Füllstände in den Füllschächten 11 und 13 wird die Produktion des speisenden Teils des Mischers 7 geregelt. Bei Stillstand der Karde 12 und einer geringen Anforderung der Karde 14 kann ein Produktionsminimum unterschritten werden, welches aufgrund einer geforderten Betriebssicherheit notwendig ist. In diesem Fall wird der speisende Teil des Mischers 7 durch die Steuerung 15 gestoppt und nach einer in einen festgelegten Produktionsbereich gestiegenen Anforderung wieder durch die Steuerung 15 eingeschaltet. Übersteigt hingegen die Anforderung der Karden 12 und 14 das Produktionsmaximum wirkt die Steuerung 15 auf die Karden 12 und 14 ein und reduziert dessen Produktion oder schaltet eine der Karden 12 oder 14 aus.

### Legende

- 1: Faserballen
- 2: Ballenöffner
- 3, 5, 8: Transportleitung
- 4: Reiniger
- 6, 9: Ventilator
- 7: Mischer
- 10: Verteiler
- 11, 13: Füllschacht Karde
- 12, 14: Karde
- 15: Steuerung

## Patentansprüche

1. Verfahren zur Steuerung der Produktion in einer Putzerei mit einer Steuerung (15) und mit zumindest einer speisenden Maschine (1, 7) mit einem speisenden Teil und zumindest einer zu speisenden Maschine (7, 12, 14), wobei die zu speisende Maschine (7, 12, 14) eine Füllstandsmessung aufweist und die Maschinen (1, 7, 12, 14) mit der Steuerung (15) verbunden sind, wobei die zu speisende Maschine (1, 7) aufgrund des Füllstandes eine Produktion des speisenden Teils der speisenden Maschine (1, 7) bestimmt, **dadurch gekennzeichnet, dass** für jede speisende Maschine (1, 7) ein Produktionsbereich mit einem Produktionsminimum und einem Produktionsmaximum festgelegt wird, und dass bei einer Unterschreitung des Produktionsminimums der speisende Teil der speisenden Maschine (1, 7) abgeschaltet wird, wobei die Abschaltung unabhängig von einem Füllzustand der zu speisenden Maschine (7, 12, 14) erfolgt.

2. Verfahren nach Anspruch 1, **dadurch gekennzeichnet, dass** der Produktionsbereich bestimmt wird durch zwischen der speisenden Maschine (1, 7) und der zu speisenden Maschine (7, 12, 14) angeordnete weitere faserverarbeitende Maschinen (4).

3. Verfahren nach Anspruch 2, **dadurch gekennzeichnet, dass** bei einem Wechsel des Produktionsbereichs die zwischen der speisenden Maschine (1, 7) und der zu speisenden Maschine (7, 12, 14) angeordnete weitere faserverarbeitende Maschine (4) neu eingestellt wird.

4. Verfahren nach mindestens einem der vorangehenden Ansprüche, **dadurch gekennzeichnet, dass** die Produktion innerhalb des Produktionsbereichs durch die zu speisende Maschine (7, 12, 14) bestimmt wird.

5. Verfahren nach Anspruch 4, **dadurch gekennzeichnet, dass** die zu speisende Maschine (7, 12, 14) aufgrund eines niedrigen Füllzustandes den speisenden Teil der speisenden Maschine (1, 7) über die Steuerung (15) einzuschalten vermag.

6. Verfahren nach mindestens einem der vorangehenden Ansprüche, **dadurch gekennzeichnet, dass** bei einem Überschreiten des Produktionsmaximums durch die Steuerung (15) auf die Produktion der zu speisenden Maschine (7, 12, 14) einwirkt oder einzelne zu speisende Maschinen (7, 12, 14) abschaltet.

7. Verfahren nach mindestens einem der vorangehenden Ansprüche, **dadurch gekennzeichnet, dass** die Steuerung (15) Produktionswerte der zu speisenden Maschine (7, 12, 14) und eine Dauer zwischen den Abschaltungen der speisenden Maschine (1, 7) speichert und auswertet und eine Anpassung der Produktion und/oder einen Wechsel des Produktionsbereichs vornimmt oder vorschlägt, um notwendige Abschaltungen zu minimieren.

8. Vorrichtung zur Durchführung des Verfahrens nach einem der Ansprüche 1 bis 7, mit einer Steuerung (15) und mit zumindest einer speisenden Maschine (1, 7) mit einem speisenden Teil und zumindest einer zu speisenden Maschine (7, 12, 14), wobei die zu speisende Maschine (7, 12, 14) eine Füllstandsmessung aufweist und die Maschinen (1, 7, 12, 14) mit der Steuerung (15) verbunden sind, wobei eine Produktion des speisenden Teils der speisenden Maschine (1, 7) durch die zu speisende Maschine (1, 7) aufgrund des Füllstandes bestimmt ist, **dadurch gekennzeichnet, dass** für jede speisende Maschine (1, 7) in der Steuerung (15) ein Produktionsbereich mit einem Produktionsminimum und einem Produktionsmaximum festlegbar ist, und dass bei einer Unterschreitung des Produktionsminimums unabhängig von einem Füllzustand der zu speisenden Maschine (7, 12, 14) eine Abschaltung des speisenden Teils der speisenden Maschine (1, 7) vorgesehen ist.

9. Vorrichtung nach Anspruch 8, **dadurch gekennzeichnet, dass** der Produktionsbereich bestimmt ist durch zwischen der speisenden Maschine (1, 7) und der zu speisenden Maschine (7, 12, 14) angeordnete weitere faserverarbeitende Maschinen (4).

10. Vorrichtung nach Anspruch 9, **dadurch gekennzeichnet, dass** Mittel vorgesehen sind, durch welche bei einem Wechsel des Produktionsbereichs eine Neueinstellung der zwischen der speisenden Maschine (1, 7) und der zu speisenden Maschine (7, 12, 14) angeordneten weiteren faserverarbeitenden Maschine (4) durch die Steuerung (15) ausführbar ist

11. Vorrichtung nach einem der Ansprüche 9 bis 10, **dadurch gekennzeichnet, dass** für verschiedene Einstellungen der zwischen der speisenden Maschine (1, 7) und der zu speisenden Maschine (7, 12, 14) angeordneten weiteren faserverarbeitenden Maschine (4) in der Steuerung (15) verschiedene Produktionsbereiche hinterlegt sind.

## Claims

1. A method for controlling the production in a blow room, comprising a controller (15) and at least one supplying machine (2, 7), comprising a supplying part and at least one machine to be supplied (7, 12, 14), wherein the machine to be supplied (7, 12, 14) has a filling level measurement, and the machines (2, 7, 12, 14) are connected to the controller (15), wherein the machine to be supplied (7, 12, 14) determines the production of the supplying part of the supplying machine (2, 7) based on the filling level, **characterized in that** a production area having a minimum production and a maximum production is defined for each supplying machine (2, 7), and when production drops below the minimum production, the supplying part of the supplying machine (2, 7) is shut down, the shutdown taking place independently of the filling level of the machine to be supplied (7, 12, 14).

2. The method according to claim 1, **characterized in that** the production area is determined by additional fiber processing machines (4) located between the supplying machine (2, 7) and the machine to be supplied (7, 12, 14).

3. The method according to claim 2, **characterized in that** when there is a change in the production area, the additional fiber processing machine (4) located between the supplying machine (2, 7) and the machine to be supplied (7, 12, 14) is adjusted anew.

4. The method according to at least one of the preceding claims, **characterized in that** the production within the production area is determined by the machine to be supplied (7, 12, 14).

5. The method according to claim 4, **characterized in that** the machine to be supplied (7, 12, 14) is capable of turning on the supplying part of the supplying machine (2, 7) by means of the controller (15) based on a low filling level.

6. The method according to at least one of the preceding claims, **characterized in that** when the production exceeds the maximum production, the controller (15) influences the production of the machine to be supplied (7, 12, 14) or individual machines to be supplied (7, 12, 14) are shut down.

7. The method according to at least one of the preceding claims, **characterized in that** the controller (15) saves production values of the machine to be supplied (7, 12, 14) and saves and evaluates the period of time between the shutdowns of the supplying machine (2, 7) and performs or proposes an adjustment in the production and/or a change in the production area in order to minimize the necessary shutdowns.

8. A device for carrying out the method according to any one of claims 1 to 7, having a controller (15) and at least one supplying machine (2, 7) with a supplying part and at least one machine to be supplied (7, 12, 14) wherein the machine to be supplied (7, 12, 14) has a filling level measurement, and the machines (2, 7, 12, 14) are connected to the controller (15), wherein production of the supplying part of the supplying machine (2, 7) is determined by the machine to be supplied (7, 12, 14) on the basis of the filling level, **characterized in that** a production area with a minimum production and a maximum production can be defined for each supplying machine (2, 7) in the controller (15), and when production falls below the minimum production, regardless of the filling level of the machine to be supplied (7, 12, 14), a shutdown of the supplying part of the supplying machine (2, 7) is provided.

9. The device according to claim 8, **characterized in that** the production area is determined by additional fiber processing machines (4) located between the supplying machine (2, 7) and the machine to be supplied (7, 12, 14).

10. The device according to claim 9, **characterized in that** means by which a new adjustment of the additional fiber processing machine (4) located between the supplying machine (2, 7) and the machine to be supplied (7, 12, 14) when there is a change in the production area can be carried out by the controller (15).

11. The device according to any one of claims 9 to 10, **characterized in that** for various settings of the additional fiber processing machine (4) located between the supplying machine (2, 7) and the machine to be supplied (7, 12, 14) various production areas are saved in the controller (15).

## Revendications

1. Procédé permettant de commander la production dans une salle de nettoyage avec un dispositif de commande (15) et avec au moins une machine d'alimentation (1, 7) avec une partie d'alimentation et au moins une machine à alimenter (7, 12, 14), dans lequel la machine à alimenter (7, 12, 14) présente un dispositif de mesure du niveau de remplissage et les machines (1, 7, 12, 14) sont reliées au dispositif de commande (15), dans lequel la machine à alimenter (1, 7) détermine une production de la partie d'alimentation de la machine d'alimentation (1, 7) sur la base du niveau de remplissage, **caractérisé en ce qu'**une zone de production avec un minimum de production et un maximum de production est fixée pour chaque machine d'alimentation (1, 7), et **en ce qu'**en cas de soupassement du minimum de production, la partie d'alimentation de la machine d'alimentation (1, 7) est arrêtée, l'arrêt étant effectué indépendamment d'un niveau de remplissage de la machine à alimenter (7, 12, 14).

2. Procédé selon la revendication 1, **caractérisé en ce que** la zone de production est déterminée par des machines de traitement des fibres supplémentaires (4) disposées entre la machine d'alimentation (1, 7) et la machine à alimenter (7, 12, 14).

3. Procédé selon la revendication 2, **caractérisé en ce qu'**en cas de changement de la zone de production, on procède à un nouveau réglage de la machine de traitement des fibres (4) disposée entre la machine d'alimentation (1, 7) et la machine à alimenter (7, 12, 14).

4. Procédé selon au moins l'une des revendications précédentes, **caractérisé en ce que** la production à l'intérieur de la zone de production est déterminée par la machine à alimenter (7, 12, 14).

5. Procédé selon la revendication 4, **caractérisé en ce que** la machine à alimenter (7, 12, 14) est capable de mettre en marche la machine d'alimentation (1, 7) par l'intermédiaire du dispositif de commande (15) sur la base d'un niveau de remplissage bas.

6. Procédé selon au moins l'une des revendications précédentes, **caractérisé en ce qu'**en cas de dépassement du maximum de production le dispositif de commande (15) agit sur la production de la machine à alimenter (7, 12, 14) ou arrête des machines à alimenter individuelles (7, 12, 14).

7. Procédé selon au moins l'une des revendications précédentes, **caractérisé en ce que** le dispositif de commande (15) stocke et évalue des valeurs de production de la machine à alimenter (7, 12, 14) ainsi qu'une durée entre les arrêts de la machine d'alimentation (1, 7) et procède à ou propose un ajustement de la production et/ou un changement de la zone de production afin de minimiser les arrêts nécessaires.

8. Dispositif permettant d'effectuer le procédé selon l'une quelconque des revendications 1 à 7, avec un dispositif de commande (15) et avec au moins une machine d'alimentation (1, 7) avec une partie d'alimentation et au moins une machine à alimenter (7, 12, 14), dans lequel la machine à alimenter (7, 12, 14) présente un dispositif de mesure du niveau de remplissage et les machines (1, 7, 12, 14) sont reliées au dispositif de commande (15), dans lequel la machine à alimenter (1, 7) détermine une production de la partie d'alimentation de la machine d'alimentation (1, 7) par la machine d'alimentation (1, 7) sur la base du niveau de remplissage, **caractérisé en ce que** pour chaque machine d'alimentation (1, 7), une zone de production avec un minimum de production et un maximum de production peut être fixée dans le dispositif de commande (15), et **en ce qu'**en cas de soupassement du minimum de production, un arrêt de la partie d'alimentation de la machine d'alimentation (1, 7) est prévu indépendamment d'un niveau de remplissage de la machine à alimenter (7, 12, 14).

9. Dispositif selon la revendication 8, **caractérisé en ce que** la zone de production est déterminée par des machines de traitement des fibres supplémentaires (4) disposées entre la machine d'alimentation (1, 7) et la machine à alimenter (7, 12, 14).

10. Dispositif selon la revendication 9, **caractérisé en ce que** des moyens sont prévus qui en cas de changement de la zone de production permettent de procéder à un nouveau réglage de la machine de traitement des fibres supplémentaire (4) disposée entre la machine d'alimentation (1, 7) et la machine à alimenter (7, 12, 14) par le dispositif de commande (15).

11. Dispositif selon l'une quelconque des revendications 9 à 10, **caractérisé en ce que** pour différents réglages de la machine de traitement des fibres supplémentaire (4) disposée entre la machine d'alimentation (1, 7) et la machine à alimenter (7, 12, 14) différentes zones de production sont mémorisées dans le dispositif de commande (15).
